# EUROPÄISCHE PATENTANMELDUNG

(11) **EP 2 859 967 A1**
(43) Veröffentlichungstag der Anmeldung: **15.04.2015**
(21) Anmeldenummer: 13188396.9
(22) Anmeldetag: 11.10.2013
(51) Int. Cl.: B21D 39/03, B29C 70/08, B62D 29/00

(54) **Verfahren zur Herstellung eines Halbzeugs oder Bauteils**

(71) Anmelder: voestalpine Stahl GmbH, 4020 Linz (AT)
(72) Erfinder: Etzlstorfer, Christoph, 4264 Grünbach (AT); Riegler, Johannes, 4611 Buchkirchen (AT)
(74) Vertreter: Jell, Friedrich

(57) **Zusammenfassung**

Es wird ein Verfahren (1, 16) zur Herstellung eines Halbzeugs oder Bauteils (2) gezeigt, bei dem auf einen Metallträger (3), insbesondere einem Blech (4), eine aushärtbare Beschichtung (6, 17) mit faserverstärktem Kunststoff aufgebracht und der beschichtete Metallträger (3) in einem weiteren Schritt zu einem Halbzeug oder Bauteil (2) umgeformt, insbesondere tiefgezogen oder gebogen, wird. Für ein verbessertes und kostengünstiges Verfahren (1, 17) wird vorgeschlagen, dass der Metallträger (3) höchstens bereichsweise beschichtet und auf diese Beschichtung eine metallische Lage (12), insbesondere aus einem Blech, aufgebracht wird, wobei der Metallträger dem Umformen erst dann unterworfen wird, wenn seine Beschichtung (6, 17) in ihrer, insbesondere unvollständigen, Aushärtung eine feste stoffschlüssige Verbindung zwischen Metallträger und metallischer Lage (12) ausbildet, wobei der beschichtete Metallträger (3) derart umgeformt wird, dass sich dessen Umformradien (21) folgende plastische Formänderungen im Wesentlichen, vorzugsweise ausschließlich, in seinen beschichtungsfreien Bereichen (15) ausbilden.

## Beschreibung

Die Erfindung betrifft ein Verfahren zur Herstellung eines Halbzeugs oder Bauteils, bei dem auf einen Metallträger, insbesondere einem Blech, eine aushärtbare Beschichtung mit faserverstärktem Kunststoff aufgebracht und der beschichtete Metallträger in einem weiteren Schritt zu einem Halbzeug oder Bauteil umgeformt, insbesondere tiefgezogen oder gebogen, wird.

Aus dem Stand der Technik sind Hybridwerkstoffe, aufweisend mehrere übereinanderliegende Metallschichten, jeweils mit vollflächig faserverstärkten unidirektionalen Prepreg-Lagen beschichtet, bekannt (DE19956394B4), die nach einer Umformung des Hybridwerkstoffs zu einem Profil ausgehärtet werden. Ein derartiges Verfahren ist jedoch nachteilig vergleichsweise empfindlich auf vorzeitige Aushärtung der Prepreg-Schicht, bevor der Hybridwerkstoff seine endgültige Form durch sein Umformen eingenommen hat. Dies kann insbesondere zu einer verminderten Formgenauigkeit des umgeformten Hybridwerkstoffs samt Beschädigungen am faserverstärkten Kunststoff (FVK) bzw. vorimprägnierten Carbonfasern (CFK-Prepreg) führen. Ein reproduzierbares Verfahren ist auf diese Weise also nicht sichergestellt. Außerdem ist die Durchführung eines Verfahrens unter Verwendung unausgehärteter Prepreg-Schichten vergleichsweise aufwendig. Des Weiteren erfordern derartige Hybridwerkstoffe einen vergleichsweise hohen Materialbedarf an faserverstärktem Kunststoff. Kostengünstige Halbzeuge oder Bauteile sind durch solch ein Verfahren nicht herstellbar.

Außerdem ist es für die Herstellung eines faserverstärkten Halbzeugs oder Bauteils bekannt, ein Stahlblech zunächst umzuformen und in einem weiteren Schritt mit einem ausgehärteten FVK-Teil partiell zu versehen bzw. damit zu beschichten. Die voneinander getrennten Verfahrensschritte, nämlich Formgebung des Metallträgers und Formgebung des FVK-Teils, samt ihrem abschließenden Verbinden, beispielsweise mit Bolzen (DE102009009112A1), sind vergleichsweise aufwendig durchzuführen und erfordern zudem kostenintensive Halbzeuge bzw. Bauteile, zumal dieses Verfahren eines vergleichsweise hohen Automatisierungsaufwands bedarf.

Es ist daher die Aufgabe der Erfindung, ausgehend vom eingangs geschilderten Stand der Technik, das Herstellungsverfahren für ein verstärktes Halbzeug oder Bauteil nicht nur zu vereinfachen, sondern auch robust zu gestalten, um somit auch eine hohe Reproduzierbarkeit des Verfahrens zu erlangen. Außerdem soll das Verfahren einem einfach zu automatisierenden Verfahrensablauf zugänglich sein.

Die Erfindung löst die gestellte Aufgabe dadurch, dass der Metallträger höchstens bereichsweise beschichtet und auf diese Beschichtung eine metallische Lage, insbesondere aus einem Blech, aufgebracht wird, wobei der Metallträger dem Umformen erst dann unterworfen wird, wenn seine Beschichtung in ihrer, insbesondere unvollständigen, Aushärtung eine feste stoffschlüssige Verbindung zwischen Metallträger und metallischer Lage ausbildet, wobei der beschichtete Metallträger derart umgeformt wird, dass sich dessen Umformradien folgende plastische Formänderungen im Wesentlichen, vorzugsweise ausschließlich, in seinen beschichtungsfreien Bereichen ausbilden.

Wird auf diese Beschichtung eine metallische Lage, insbesondere aus einem Blech, aufgebracht und der Metallträger dem Umformen erst dann unterworfen, wenn seine Beschichtung in ihrer, insbesondere unvollständigen, Aushärtung eine feste stoffschlüssige Verbindung zwischen Metallträger und metallischer Lage ausbildet, kann das Verfahren gegenüber unvermeidbaren Aushärtereaktionen der Beschichtung robuster gestaltet werden, weil Aushärtereaktionen der Beschichtung im Verfahren zugelassen werden. Im Gegensatz zum Stand der Technik müssen erfindungsgemäß auch Lagerzeiten des Metallträgers weniger streng beachtet werden, um damit Eigenschaftsverluste der Polymermatrix durch Überschreiten eines Verarbeitungszeitraums in Kauf nehmen zu müssen. Dadurch kann sich auch eine zeitliche Entspannung im Verfahrensablauf ergeben, insbesondere weil die Verfahrensschritte Beschichtung und Umformen voneinander zeitlich unabhängiger erfolgen können, was gerade für ein Tiefziehen oder Biegen des Metallträgers zu dessen Formgebung von Vorteil sein kann. Die metallische Lage kann nämlich auch nach der Umformung eine saubere Trennung von beschichtetem Metallträger und Werkzeug sicherstellen, wodurch hohe Reproduzierbarkeit und vergleichsweise einfache Automatisierung des Verfahrens möglich werden können. Besonders kann sich das erfindungsgemäße Verfahren zudem dadurch auszeichnen, dass der Metallträger hinsichtlich mindestens einer seiner Trägerseiten höchstens bereichsweise beschichtet wird, um damit die plastische Verformbarkeit des Metallträgers im Wesentlichen zu erhalten. Vergleichsweise hohen Umformgraden kann zudem gefolgt werden, wenn der beschichtete Metallträger derart umgeformt wird, dass sich dessen Umformradien folgende plastische Formänderungen im Wesentlichen in seinen beschichtungsfreien Bereichen ausbilden. Diese beschichtungsfreien Trägerbereiche können nämlich plastischen Verformungen weitgehend unbeeinträchtigt von der FVK-Beschichtung folgen. Dies umso mehr, wenn sich die plastischen Formänderungen ausschließlich in diesen beschichtungsfreien Bereichen ausbilden. Selbst anspruchsvolle Konturen, beispielsweise die eines Schwellers oder Längsträgers eines Kraftfahrzeugs, können damit in den Metallträger formgenau eingebracht werden. Außerdem kann selbst die stoffschlüssige Verbindung, welche bereits durch eine teilweise bzw. nicht vollständig ausgehärtete bzw. höchstens teilausgehärtete FVK-Beschichtung entstehen kann, eine gewisse eigene plastische Verformbarkeit zulassen und damit positiv zum Umformverhalten des Metallträgers beitragen, wodurch selbst engen Radien versagensfrei gefolgt werden kann. Zugleich können sich die beschichteten Trägerbereiche durch besonders hohe Festigkeitswerte auszeichnen und der Metallträger während des Umformens und auch nach dem Umformen mechanisch stabilisieren. Erfindungsgemäß kann somit ein hoher Grad an plastischem Formänderungsvermögen mit hohen mechanischen Festigkeitswerten kombiniert und zugleich eine vergleichsweise einfache Herstellungsvorschrift für den faserverstärkten Metallträger, vorzugsweise Stahlbleche, angegeben werden. Hinzu kommt, dass erfindungsgemäß Lagerzeiten des Metallträgers weniger streng beachtet werden müssen, um Verluste der gewünschten Eigenschaften der Polymermatrix zu vermeiden. Die zusätzliche metallische Lage kann zudem die Beschichtung im Rahmen der weiteren Verarbeitung und Lagerung des Metallträgers schützen. Zudem kann diese zusätzliche metallische Lage für eine erhebliche Steigerung der Festigkeitseigenschaften des Metallträgers sorgen. Des Weiteren kann die metallische Lage zur Druckbeaufschlagung der Beschichtung während der Aushärtung verwendet werden, wodurch Festigkeit vermindernde Luft- bzw. Gaseinschlüsse ausgepresst werden können. Zudem kann mithilfe der metallischen Lage eventuellen Verformungserscheinungen entgegengewirkt werden, die sich durch unterschiedliche thermische Ausdehnungskoeffizienten von Metallträger und Beschichtung ergeben können. Ein äußerst reproduzierbares Verfahren kann damit geschaffen werden.

Selbstverständlich können der Metallträger und die metallische Lage aus Blechen mit einem Eisen-, Aluminium- oder Magnesiumwerkstoff, einem Leichtmetall oder dergleichen bzw. den Legierungen daraus bestehen. Im Allgemeinen wird erwähnt, dass der faserverstärkte Kunststoff (FVK) eine thermoplastische oder duroplastische Kunststoffmatrix in Kombination mit anorganischen oder organischen Verstärkungsfasern, wie z.B. Glas, Basalt, Kohlenstoff oder Aramid als Endlos-, Lang- oder Kurzfaser, aufweisen bzw. daraus bestehen kann. Die Haftung kann verbessert werden, wenn eine chemisch vernetzende Zwischenschicht verwendet wird, die dem faserverstärkten Kunststoff als Matrix dienen kann. Des Weiteren wird im Allgemeinen erwähnt, dass eine feste stoffschlüssige Verbindung zwischen Metallträger und metallischer Lage von der Beschichtung bereits durch eine höchstens teilweise Aushärtung ausgebildet werden kann, wobei die metallische Lage einschichtig, beispielsweise in Form eines Blechs, oder mehrschichtig ausgebildet sein kann.

Im Allgemeinen ist weiter vorstellbar, auf diese metallische Lage eine aushärtbare Beschichtung mit faserverstärktem Kunststoff aufzutragen bzw. vorzusehen und damit beispielsweise den Verbund und damit dessen mechanische Festigkeit weiter zu erhöhen. Eine Stapelung von Beschichtung und metallischen Lagen ist zudem denkbar.

Besteht die metallische Lage aus einem Leichtmetall oder seiner Legierung, kann Verformungserscheinungen des Metallträgers besonders gut entgegengewirkt und in weiterer Folge ein formstabiler Verbund gewährleistet werden. Besteht der Metallträger aus einem Stahlblech und die Lage aus Aluminium oder seiner Legierung, können Verwerfungen des Stahlblechs vermieden werden.

Bereits als ausreichend kann sich herausstellen, wenn die metallische mit der Beschichtung höchstens bündig abschließt, um so die Beschichtung ausreichend vor einem Umformwerkzeug zu schützen. Im Allgemeinen ist jedoch vorstellbar, dass die Lage die Beschichtung nicht vollständig abdeckt.

Das erfindungsgemäße Verfahren kann sich insbesondere auch dann auszeichnen, wenn kohlenstofffaserverstärkter Kunststoff (CFK) als faserverstärkter Kunststoff (FVK) mit insbesondere einer duroplastischen Matrix auf den Metallträger aufgebracht wird.

Ein kostengünstiges und dennoch hochfestes Halbzeug oder Endprodukt kann geschaffen werden, wenn vorimprägnierte Carbonfasern aufgebracht werden. Damit kann nämlich ein den Anforderungen entsprechend optimiertes und hochfestes Halbzeug bzw. Endprodukt bei vergleichsweise geringer Erhöhung dessen Gewichts hergestellt werden. Andere vorimprägnierte Fasern sind vorstellbar, beispielsweise Glasfasern, Aramidfasen - jedoch haben sich Carbonfasern mit einer duroplastischen Matrix, aufgebracht auf einem Stahlblech, für ein Strukturbauteil eines Kraftfahrzeugs, insbesondere eines Schwellers oder Längsträgers, als besonders vorteilhaft hinsichtlich erreichbarer Festigkeitswerte bei vertretbaren Herstellkosten herausgestellt.

Wird faserverstärkter Kunststoff mit einer chemisch vernetzten Zwischenschicht auf den Metallträger aufgebracht, kann bereits ein teilweise ausgehärteter faserverstärkter Kunststoff in einem vergleichsweise definierten Aushärtezustand aufgebracht und damit die Reproduzierbarkeit des Verfahrens erhöht werden. Zudem kann damit die Haftung verbessert werden, insbesondere wenn diese Zwischenschicht dem faserverstärkten Kunststoff als Matrix dienen kann. Alternativ ist vorstellbar, die Haftung des faserverstärkten Kunststoffs am Metallträger dadurch zu erhöhen, indem die Oberfläche des Metallträgers mechanisch vorbehandelt, insbesondere aufgeraut, wird.

Wird der Langfasern aufweisende faserverstärkte Kunststoff (FVK) auf den Metallträger aufgebracht, kann die Beschichtung eines Metallträgers vergleichsweise rasch durchgeführt werden. Somit können die Herstellungskosten aufgrund kurzer Produktionszeiten vermindert werden. Ein derartiges Aufbringen der Langfaserbeschichtung ist mit Hilfe von Extrusion, Pultrusion, Spritzbeschichtung oder Schablonenbeschichtung denkbar.

Alternativ zu den Langfasern kann die Beschichtung auch dann schnell durchgeführt werden, wenn ein Gewebe oder Gelege des faserverstärkten Kunststoffs (FVK) in zugeschnittener Form auf den Metallträger aufgebracht wird. Mit solch einer Matrize, die entsprechend den beschichtungsfreien Trägerbereichen Aussparungen aufweist, kann außerdem ein kontinuierliches Verfahren zur Herstellung von kostengünstigen Halbzeugen oder Endprodukten ermöglicht werden.

Das Gewebe oder Gelege kann entweder mit der Kunststoffmatrix vorimprägniert auf den Metallträger aufgebracht oder nach dem Aufbringen auf den Metallträger mit der Kunststoffmatrix imprägniert werden. Für eine Automatisierung des Herstellverfahrens hat sich dabei insbesondere ein mit der Kunststoffmatrix imprägniertes Gewebe zum Auflegen auf den Metallträger ausgezeichnet.

Wird die Beschichtung auf den metallisch und/oder organisch vorbeschichteten Metallträger, eventuell unter Vorbehandlung mit einem Haftvermittler, aufgebracht, kann die Gefahr eines Versagens der stoffschlüssigen Verbindung zwischen Metallträger und Beschichtung beim Umformen deutlich verringert werden. Die Reproduzierbarkeit des Verfahrens und dessen Parameter können so erhöht werden. Außerdem kann mit einer derartigen Vorbehandlung die Resistenz gegenüber Wasser, Chemikalien und klimatischen Einflüssen und zusätzlich auch ein verbesserter Korrosionsschutz geschaffen werden.

Werden mehrere Lagen an Gewebe oder Gelege für einen insbesondere multidirektionalen Schichtaufbau des faserverstärkten Kunststoffs (FVK) übereinander gelegt, kann die mechanische Festigkeit des Halbzeugs oder Endprodukts erheblich verbessert werden.

Das Verfahren kann weiter vereinfacht werden, wenn der Metallträger, insbesondere ein Stahlblech, eine Blechdicke von 0,5 bis 5 mm, insbesondere 1 bis 2,5 mm aufweist. Das Verfahren kann weiter vereinfacht werden, wenn hierfür die Beschichtung eine Dicke von 0,2 bis 5 mm, insbesondere 0,4 bis 3 mm aufweist. Das Verfahren kann weiter vereinfacht werden, wenn die metallische Lage, insbesondere ein Blech, eine Dicke von 0,1 bis 5 mm, insbesondere 0,1 bis 2 mm aufweist.

Wird die aushärtbare Beschichtung drucklos vorgeliert und in einem weiteren Schritt an den Metallträger angedrückt, um diese auf den Metallträger aufzubringen, kann der Austritt an Kunststoff aus der Faserverstärkung reduziert und damit vermieden werden, dass dieser Kunststoff in Biegebereiche des Metallträgers unkontrolliert vordringt. Durch die im Zuge des Vorgelierens erzielte höhere Viskosität kann nämlich der Kunststoffaustritt vergleichsweise stark reduziert werden. Mit einer Schädigung des faserverstärkten Kunststoffs im Zuge des Umformens des Metallträgers muss daher nicht gerechnet werden. Zudem kann eine derart drucklos vorgelierte Beschichtung keine reduzierte Haftungseigenschaft aufweisen, was ein mechanisch belastbares Halbzeug oder Bauteil ermöglichen kann.

Besonders vorteilhaft kann das erfindungsgemäße Verfahren auch zur Herstellung eines tragenden Strukturbauteils verwendet werden, wobei sich dies insbesondere auch für einen Schweller oder Längsträger eines Kraftfahrzeugs auszeichnen konnte.

In den Figuren wird beispielsweise das erfindungsgemäße Verfahren näher dargestellt. Es zeigen
- Fig. 1: einen Verfahrensablauf mit auf einem Metallträger aufgelegtem faserverstärkten Kunststoff (FVK),
- Fig. 2: einen Verfahrensablauf mit einem Metallträger, aufweisend aufgebrachten faserverstärkten Kunststoff (FVK),
- Fig. 3: eine abgerissene Schnittansicht auf ein nach den Figuren 1 und 2 dargestelltes Bauteil und
- Fig. 4: ein Zeitdiagramm zu einem gewichtsbereinigten 3-Punkt Biegeversuch.

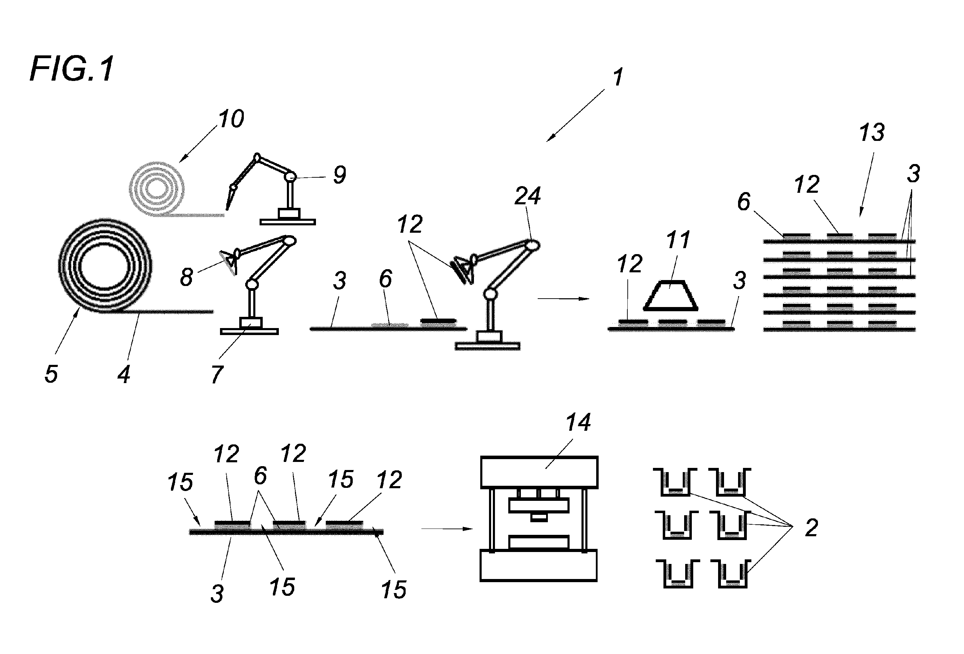

Gemäß dem nach Fig. 1 dargestellten Ablauf des Verfahrens 1 zur Herstellung eines Bauteils 2 wird im ersten Schritt auf einen Metallträger 3, der von einem Coil 4 aus Stahlblech 5 abgetrennt wird, eine aushärtbare Beschichtung 6 mit faserverstärktem Kunststoff (FVK) aufgebracht. Der Metallträger 3 wird auf dieser zu beschichtenden Seite zuvor eventuell noch gereinigt bzw. chemisch vorbehandelt, was allerdings nicht näher dargestellt worden ist. Zum Aufbringen der Beschichtung 6 ist ein Roboter 7 vorgesehen, der einen Zuschnitt 8 vom Roboter 9 aufnimmt. Der Roboter 9 schneidet zu diesem Zweck ein mit der Kunststoffmatrix vorimprägniertes Gewebe 10 entsprechend der zu beschichteten Bereichsflächen des Metallträgers 3 zu.

Auf diese Beschichtung 6 wird mithilfe eines Roboters 24 eine metallische Lage 12 aufgelegt, die die Beschichtung 6 vollständig sowie bündig abdeckt. Die metallische Lage 12 kann beispielsweise von einem Blech, Stahlblech oder Aluminiumblech, abgetrennt bzw. ausgeschnitten werden. Der so beschichtete Metallträger 3 wird in weiterer Folge einer Teilaushärtung mithilfe einer Trocknungs- bzw. Härtevorrichtung 11 unterworfen, sodass die Beschichtung 6 in ihrer Aushärtung eine feste stoffschlüssige Verbindung zwischen Metallträger 3 und metallischer Lage 12 ausbildet. Solche eine Aushärtung kann zwischen 20 und 130°C für 120 bis 500 Minuten - vorzugsweise beim vorimprägnieren Gelege zwischen 90 und 130 °C für 90 bis 180 Minuten erfolgen.

Dadurch kann der Metallträger 3 ohne Weiteres auch auf einen Stapel 13 aufgelegt und damit beispielsweise zwischengelagert oder für einen Weitertransport vorbereitet werden. Insbesondere aber kann damit ermöglicht werden, dass der beschichtete Metallträger 3 in einem weiteren Schritt zu einem Bauteil 2 umgeformt werden kann. So wird der beschichtete Metallträger 3 in ein Tiefziehwerkzeug 14 eingebracht und umgeformt. Da der Metallträger 3 höchstens bereichsweise auf einer seiner Metallträgerseiten beschichtet ist, wie dies der Fig. 1 zu entnehmen ist, kann auch eine vergleichsweise hohe plastische Verformbarkeit des Metallträgers 3 sichergestellt werden. Es können also selbst hohe Umformgrade versagensfrei erfüllt werden, wie dies beispielsweise bei einem Schweller oder Längsträger eines Kraftfahrzeugs erforderlich sein kann.

Wie in Fig. 1 ebenso zu erkennen, ist überall dort, wo der Metallträger 3 durch sein Tiefziehen einer plastischen Umformung unterliegt, ein beschichtungsfreier Bereich 15 vorgesehen. Es können aber auch entsprechend den Anforderungen weitere beschichtungsfreie Bereiche am Metallträger 3 vorhanden sein.

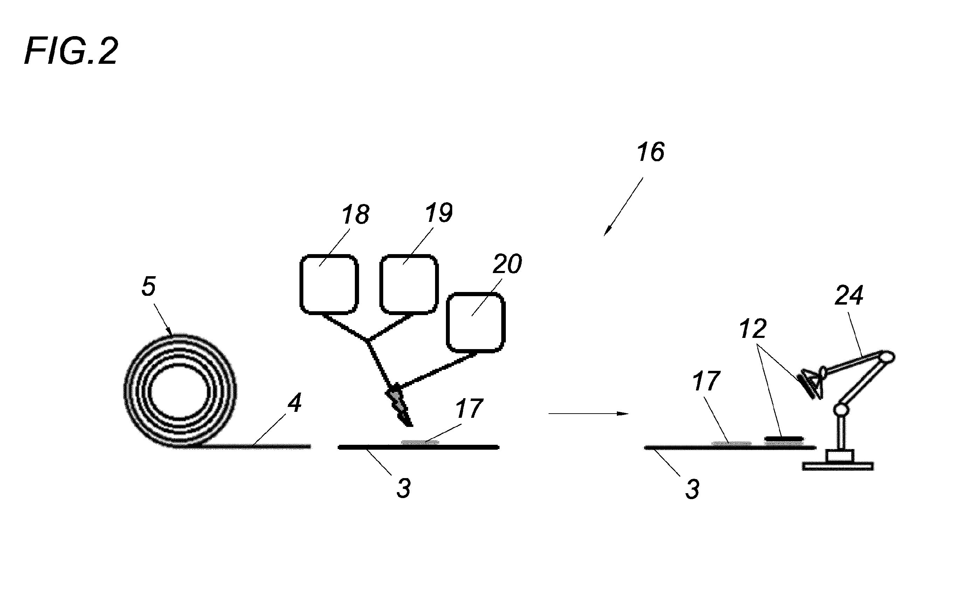

Zum Unterschied zu dem nach Fig. 1 dargestellten Verfahren 1 weist der Ablauf des Verfahrens 16 nach Fig. 2 eine andere Art der Aufbringung einer Beschichtung 17 auf den Metallträger 3 auf. Harz 18 und Härter 19 werden in einem vorgegebenen Verhältnis mit Fasern 20, vorzugsweise Langfasern, gemischt und auf den Metallträger 3 appliziert. Nach dem Aufbringen der metallischen Lage 12 kann anschließend, gleich wie bei Fig. 1, eine mindestens teilweise Aushärtung der Beschichtung 17 mithilfe einer Trocknungs- bzw. Härtevorrichtung 11 erfolgen, um damit eine feste stoffschlüssige Verbindung zwischen Metallträger 3 und metallischer Lage 12 auszubilden.

Im Allgemeinen wird erwähnt, dass nach thermischer Aktivierung bereits eine höchstens teilweise Aushärtung der Beschichtungen 6, 17 ausreichend sein kann, eine feste stoffschlüssige Verbindung zwischen Metallträger 3 und metallischer Lage 12 auszubilden. Die beschichteten Metallträger 3 können dann auf einen Stapel 13 aufgelegt bzw. auch sofort einem Tiefziehen mithilfe des Tiefziehwerkzeugs 14 unterworfen werden, was nicht näher dargestellt worden ist. Nach ausreichender Aushärtung kann nämlich der Metallträger 3, insbesondere die Platine, bis zur Umformung gelagert werden. Dadurch müssen auch spezifische Temperaturen, wie diese bei einer Lagerung von Prepreg-Lagen erfordert sind, nicht eingehalten werden, was das Verfahren vereinfacht.

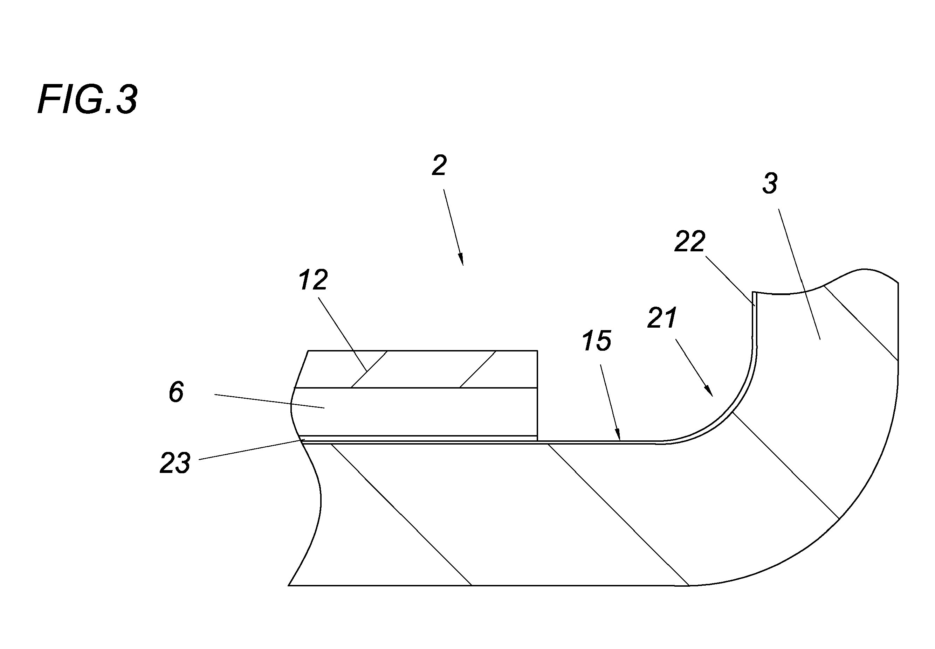

Gemäß Fig. 3 ist zu erkennen, dass der Metallträger 3 beschichtungsfreie Bereiche 15 aufweist, die beim Umformen die plastischen Formänderungen des Metallträgers 3 aufnehmen, welche den Umformradien 21 insbesondere Biegeradien folgen. Damit ist eine vergleichsweise hohe plastische Umformbarkeit des beschichteten Metallträgers 3 gewährleistet. Der Metallträger 3 weist weiter eine metallische und/oder organische Schutzbeschichtung 22, beispielsweise eine Zinkschicht auf. Zudem ist zwischen der Beschichtung 6 und der Schutzbeschichtung 22 ein Haftvermittler 23 vorgesehen. Anstelle des Haftvermittlers 23 bzw. zusätzlich zum Haftvermittler 23 ist auch vorstellbar, lediglich die Oberfläche des Metallträgers 3 mechanisch vorzubehandeln, beispielsweise durch ein Aufrauen, um damit die Anbindung der Beschichtung 6 zu verbessern. Auf diese Beschichtung 6 ist zudem die metallische Lage 12, nämlich ein Blech, zu erkennen, dass mit dieser Beschichtung zum beschichtungsfreien Bereich 15 hin bündig abschließt. Vorteilhaft kann das erfindungsgemäße Verfahren zur Optimierung der mechanischen Eigenschaften im Crashverhalten hinsichtlich des Stauch- bzw. Biegeverhaltens verwendet werden.

**Tabelle 1**

| | **Stahlblech** | **Stahlblech mit Beschichtung und mit einer metallischen Lage aus einem Stahlblech** | |
|---|---|---|---|
| **Blechdicke des Metallträgers** | 0,76 mm | 0,76 mm | 0,76 mm |
| **Faservolumenanteil in der Polymermatrix** | - | 50 bis 70% | 50 bis 70% |
| **Beschichtungsdicke** | - | 0,25 mm | 0,25 mm |
| **beschichtete Fläche** | - | 40% | 40% |
| **metallische Lage** | - | 0,2 mm | 0,5 mm |
| Spezifische absorbierte Energie beim quasistatischem axialen Stauchen | 100% | > 370% | > 531% |
| Maximale Kraft beim 3-Punkt-Biegen | 100% | > 380% | > 640% |

In Tabelle 1 werden beispielhaft die mechanischen Eigenschaften von nicht beschichteten und beschichteten flachen Halbzeugen gegenübergestellt.

Trotz einer teilweisen Beschichtung der Halbzeuge sind erhebliche Verbesserungen in der Belastbarkeit gegenüber einem nicht beschichteten Halbzeug festzustellen.

Eine Gesamtgewichtseinsparung beispielsweise einem Schweller oder Längsträger im Bereich von über 10% kann damit durchaus erreicht werden. Dies resultiert vorteilhaft in einem geringen Karosserie- bzw. damit einem geringeren Fahrzeuggesamtgewicht, welches sich wiederum auch in einem niedrigeren Treibstoffverbrauch widerspiegelt. Im Allgemeinen ist zudem denkbar, auf diese metallische Lage 12 einem Korrosionsschutz vorzusehen, um damit während der gesamten Lebenszeit des Bauteils dessen Crasheigenschaften sicherzustellen.

Das Verhältnis von Metallträgerdicke zu Beschichtungsdicke hat sich in den Beispielen ein Bereich von 1:2 bis zu 1:0,4 als vorteilhaft erwiesen. Die Stahlblechdicke bzw. Blechdicke des jeweiligen Metallträgermaterials kann auch variiert werden, die Erfindung kann sich besonders bei einer Metallträgerdicke im Bereich von 0,5 bis 5 mm, insbesondere 1 bis 2,5 mm auszeichnen. Insgesamt ist damit gezeigt, dass die Festigkeit erheblich gesteigert werden konnte und dies überraschend mit bereits relativ dünnen FVK Schichten im Bereich von von 0,2 bis 5 mm, insbesondere 0,4 bis 3 mm Beschichtungsdicke.

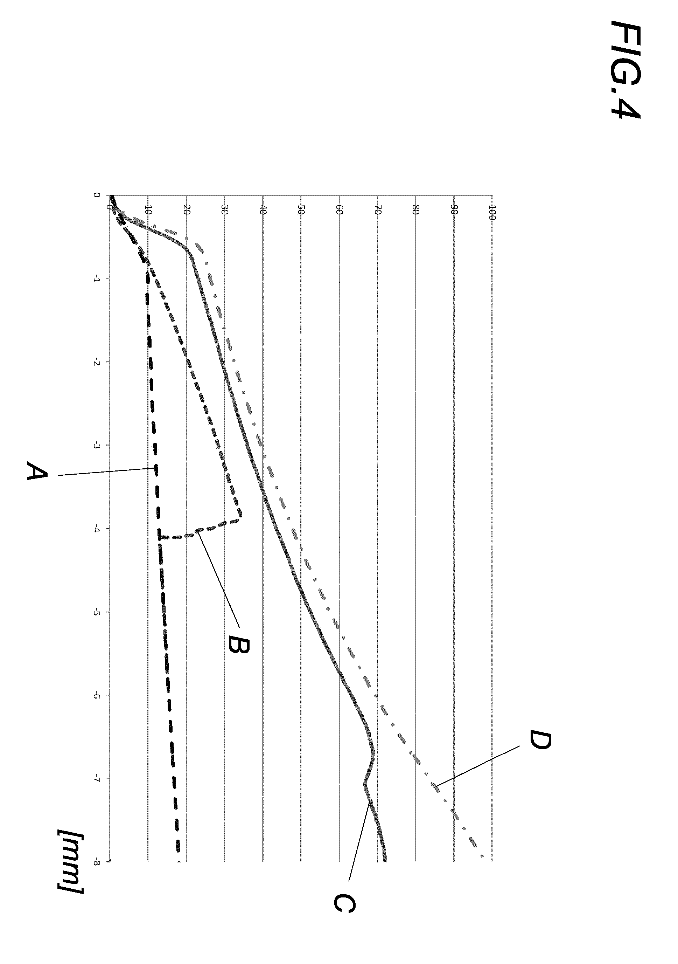

Gemäß Fig. 4 wird ein Zeitdiagramm mit gewichtsbereinigten Ergebnissen eines 3-Punkt Biegeversuches der nach Tabelle 1 angeführten flachen Halbzeuge gezeigt, wofür der Verfahrweg des Biegewerkzeugs in mm in einer Achse über die Kraft in kNm, in Relation zum Gewicht in kg des jeweiligen flachen Halbzeugs, in einer anderen Achse aufgetragen wurde.

Das aus einem Stahlblech (Blechdicke 0,76mm) gefertigte flache Halbzeug A zeigt gegenüber einem flachen Halbzeug B, das ein Stahlblech (Blechdicke 0,76mm) mit einer einlagigen CFK Beschichtung aufweist, deutlich verminderte spezifische Eigenschaften.

Die erfindungsgemäßen flachen Halbzeuge C und D, die je auf einem Stahlblech (Blechdicke 0,76mm) eine einlagige CFK Beschichtung und eine metallische Lage aus einem Metallblech aufweisen, zeigten die besten Ergebnisse in den spezifische Eigenschaften. Durch die zusätzliche metallische Lage auf der Beschichtung ist eine deutliche Steigerung des Crashenergieabsorptionsvermögens und der Festigkeitseigenschaften des Bauteils möglich. Der Vollständigkeit halber wird noch erwähnt, dass die Beschichtung, nämlich ein Faser-Kunststoff-Verbund (FKV), der Halbzeuge B, C und D ident sind.

Im Vergleich zum Halbzeug D, das eine metallische Lage mit einer Dicke bzw. Blechstärke von 0,5 mm aufweist, ist beim Halbzeug C eine metallische Lage mit einer Dicke bzw. Blechstärke von 0,2 mm vorgehen. Bereits eine zusätzliche metallische Lage von 0,2 mm bringt eine deutliche Verbesserung der spezifischen Eigenschaften gegenüber den Halbzeug A und B. Hingegen zeigte sich überraschend, dass eine Erhöhung der Blechdicke der metallischen Lage von 0,2 auf 0,5 mm keinen äquivalenten Unterschied in den spezifischen Eigenschaften erbrachte. Die metallische Lage kann daher vergleichsweise dünn gehalten werden und damit und Material sparend das Verfahren erheblich verbessern.

Durch die erfindungsgemäße metallische Lage 12 wird das spezifische Gesamtgewicht nur marginal erhöht, wo hingegen das Energieaufnahmevermögen eine deutliche Steigerung erfährt. Besonders hervorgehoben wird, dass es durch die metallische Lage 12 erst spät zum Reißen der Verstärkungsfasern in der Beschichtung 6 kommt. Die erhöhte Bruchdehnung der metallischen Lage 12 kann nämlich eine eventuelle Rissausbreitung ausgehend vom äußeren in den inneren Bereich der Beschichtung 6 gezielt verzögert, was die Standfestigkeit des Bauteils und zudem auch damit seine Energieaufnahme im Crashfall weiter steigert.

## Patentansprüche

1. Verfahren zur Herstellung eines Halbzeugs oder Bauteils (2), bei dem auf einen Metallträger (3), insbesondere einem Blech (4), eine aushärtbare Beschichtung (6, 17) mit faserverstärktem Kunststoff aufgebracht und der beschichtete Metallträger (3) in einem weiteren Schritt zu einem Halbzeug oder Bauteil (2) umgeformt, insbesondere tiefgezogen oder gebogen, wird, **dadurch gekennzeichnet, dass** der Metallträger (3) höchstens bereichsweise beschichtet und auf diese Beschichtung eine metallische Lage (12), insbesondere aus einem Blech, aufgebracht wird, wobei der Metallträger dem Umformen erst dann unterworfen wird, wenn seine Beschichtung (6, 17) in ihrer, insbesondere unvollständigen, Aushärtung eine feste stoffschlüssige Verbindung zwischen Metallträger und metallischer Lage (12) ausbildet, wobei der beschichtete Metallträger (3) derart umgeformt wird, dass sich dessen Umformradien (21) folgende plastische Formänderungen im Wesentlichen, vorzugsweise ausschließlich, in seinen beschichtungsfreien Bereichen (15) ausbilden.

2. Verfahren nach Anspruch 1, **dadurch gekennzeichnet, dass** die metallische Lage (12) aus einem Leichtmetall, insbesondere Aluminium, oder seiner Legierung besteht.

3. Verfahren nach Anspruch 1 oder 2, **dadurch gekennzeichnet, dass** die metallische Lage (12) mit der Beschichtung (6, 17) höchstens bündig abschließt.

4. Verfahren nach Anspruch 1, 2 oder 3, **dadurch gekennzeichnet, dass** kohlenstofffaserverstärkter Kunststoff als faserverstärkter Kunststoff mit insbesondere einer duroplastischen Matrix auf den Metallträger (3) aufgebracht wird.

5. Verfahren nach Anspruch 4, **dadurch gekennzeichnet, dass** vorimprägnierte Carbonfasern aufgebracht werden.

6. Verfahren nach einem der Ansprüche 1 bis 5, **dadurch gekennzeichnet, dass** faserverstärkter Kunststoff mit einer chemisch vernetzten Zwischenschicht auf den Metallträger (3) aufgebracht oder die Oberfläche des Metallträgers (3) mechanisch vorbehandelt, insbesondere aufgeraut, wird.

7. Verfahren nach einem der Ansprüche 1 bis 6, **dadurch gekennzeichnet, dass** der Langfasern aufweisende faserverstärkte Kunststoff auf den Metallträger (3) aufgebracht wird.

8. Verfahren nach einem der Ansprüche 1 bis 7, **dadurch gekennzeichnet, dass** ein Gewebe oder Gelege des faserverstärkten Kunststoffs in zugeschnittener Form (8) auf den Metallträger (3) aufgebracht wird.

9. Verfahren nach Anspruch 8, **dadurch gekennzeichnet, dass** das Gewebe oder Gelege entweder mit der Kunststoffmatrix vorimprägniert auf den Metallträger (3) aufgebracht wird, oder nach dem Aufbringen auf den Metallträger (3) mit der Kunststoffmatrix imprägniert wird.

10. Verfahren nach einem der Ansprüche 1 bis 9, **dadurch gekennzeichnet, dass** die Beschichtung (6, 17) auf einen metallisch und/oder organisch vorbeschichteten Metallträger (3), eventuell unter Vorbehandlung mit einem Haftvermittler (23), aufgebracht wird.

11. Verfahren nach einem der Ansprüche 1 bis 10, **dadurch gekennzeichnet, dass** mehrere Lagen an Gewebe oder Gelege für einen insbesondere multidirektionalen Schichtaufbau des faserverstärkten Kunststoffs übereinander gelegt werden.

12. Verfahren nach einem der Ansprüche 1 bis 11, **dadurch gekennzeichnet, dass** der Metallträger (3), insbesondere ein Stahlblech (4), eine Blechdicke von 0,5 bis 5 mm, insbesondere 1 bis 2,5 mm aufweist.

13. Verfahren nach einem der Ansprüche 1 bis 12, **dadurch gekennzeichnet, dass** die Beschichtung (6, 17) eine Dicke von 0,2 bis 5 mm, insbesondere 0,4 bis 3 mm aufweist.

14. Verfahren nach einem der Ansprüche 1 bis 13, **dadurch gekennzeichnet, dass** die metallische Lage (12) eine Dicke von 0,1 bis 5 mm, insbesondere 0,1 bis 2 mm aufweist.

15. Verfahren nach einem der Ansprüche 1 bis 14, **dadurch gekennzeichnet, dass** die aushärtbare Beschichtung (6, 17) drucklos vorgeliert und in einem weiteren Schritt an den Metallträger (3) angedrückt wird, um diese auf den Metallträger (3) aufzubringen.

16. Verwendung des Verfahrens (1, 16) nach einem der Ansprüche 1 bis 15 zur Herstellung eines tragenden Strukturbauteils, insbesondere Schweller oder Längsträger, eines Kraftfahrzeugs.
